# EUROPEAN PATENT SPECIFICATION

(11) **EP 3 875 659 B1**
(45) Date of publication and mention of the grant of the patent: **02.04.2025**
(21) Application number: 21159269.6
(22) Date of filing: 25.02.2021
(51) Int. Cl.: D06F 29/00, D06F 39/12, D06F 31/00

(54) **STACK-TYPE LAUNDRY TREATING APPARATUS**
STAPELARTIGE WÄSCHEBEHANDLUNGSVORRICHTUNG
APPAREIL DE TRAITEMENT DU LINGE DE TYPE À EMPILEMENT

(30) Priority: 05.03.2020 KR 20200027778; 14.10.2020 KR 20200132544
(43) Date of publication of application: 08.09.2021
(73) Proprietor: LG Electronics Inc., Seoul 07336 (KR)
(72) Inventor: KWON, Daehan, 08592 Seoul (KR); JIN, Donghyun, 08592 Seoul (KR); CHO, Sangho, 08592 Seoul (KR)
(74) Representative: Vossius & Partner Patentanwälte Rechtsanwälte mbB

(56) References cited:
- EP-A1- 2 703 536
- EP-A1- 3 521 501
- US-A1- 2006 010 934

## Description

### BACKGROUND

### Field

The present invention relates to a stack-type laundry treating apparatus, and more specifically, relates to a stack-type laundry treating apparatus in which a plurality of treating apparatuses are stacked vertically to increase space utilization, and an upper treating apparatus and a lower treating apparatus are easily manipulated.

### Discussion of the Related Art

A laundry treating apparatus may be classified into a front-loading type laundry treating apparatus and a top-loading type laundry treating apparatus according to a manner in which laundry is input. Depending on a manner in which the laundry is treated, the laundry treating apparatus may be classified into a washing apparatus for washing the laundry and a drying apparatus for drying the laundry.

In recent years, the front loading type washing apparatus may have a reduced overall height and increased washing capacity, compared to the top loading type washing apparatus in which an inner tub as a washing tub rotates while standing upright. In the front loading type washing apparatus, twisting of the laundry hardly occur. Thus, demand of the front loading type washing apparatus is increasing.

The front-loading type washing apparatus includes a tub disposed inside a cabinet defining an appearance thereof, a drum rotatable inside the tub, and a driver that rotates the drum. The rotation of the drum may cause friction between the drum, a washing-water, and an object to be washed (laundry), thereby removing contaminations from the laundry.

Further, in recent years, a drying apparatus having an appearance similar to that of the front loading type washing apparatus is being manufactured. The drying apparatus includes a drying drum rotatable inside a cabinet, a driver that rotates the drying drum, and a hot air supply that supplies hot and dry air into the drum, thereby drying the laundry in a wet state after washing thereof is completed.

When the washing apparatus and the drying apparatus according to the prior art as described above are installed at the same time, the washing apparatus and the drying apparatus are installed side by side in a horizontal direction on an installation face.

However, when an installation space is narrow, the washing apparatus and the drying apparatus are separately installed in separate spaces, and the laundry that has been# washed in the washing apparatus is moved/injected to the drying apparatus to dry the laundry.

Recently, a washing apparatus having a mount face or a mounting part for installing a drying apparatus thereon so that the drying apparatus may be stacked on a top of the washing apparatus has been commercially available.

However, as described above, when the washing apparatus and the drying apparatus that may be stacked vertically according to the prior art, and when the washing apparatus has the mount face for mounting the drying apparatus thereon, it is very difficult to fix the drying apparatus at a correct position on the mount face. Thus, when a separate fixing device is not used, the drying apparatus may be separated from the correct installation position when the drying apparatus operates.

Further, when the washing apparatus has a separate mounting part for stacking the drying apparatus on the washing apparatus, the separate installation part is fixed to the washing apparatus, and then the drying apparatus is disposed on the washing apparatus, and then the washing apparatus and the drying apparatus must be fixed to each other via the mounting part. This process is cumbersome.

Therefore, a stacking structure of the washing apparatus and the drying apparatus should be improved such that the drying apparatus may be stacked on and fixed to the washing apparatus more conveniently.

US 2006/010934 A1 discloses a stackable structure for stably vertically stacking a drying machine upon a washing machine. EP 3 521 501 A1 discloses a washing machine including a plurality of washers.

### SUMMARY

The present disclosure has been devised to solve the above problem. Thus, an object of the present invention is to provide a stack-type laundry treating apparatus in which an upper treating apparatus is stacked on a top of a lower treating apparatus.

Further, an object of the present invention is to provide a stack-type laundry treating apparatus including means which is disposed between the lower treating apparatus and the upper treating apparatus, and limits a position of the upper treating apparatus.

Another object of the present invention is to provide a stack-type laundry treating apparatus in which a position of the upper treating apparatus may be corrected when the upper treating apparatus is stacked on the lower treating apparatus.

The present invention is defined in independent claim 1. Advantageous aspects are defined in the dependent claims.

According to the stack-type laundry treating apparatus according to the present disclosure, an effect of improving a support state in which the lower treating apparatus supports the upper treating apparatus thereon may be realized by improving a fastening structure between the lower treating apparatus and the upper treating apparatus.

Further, according to the stack-type laundry treating apparatus according to the present disclosure, when the upper treating apparatus is stacked on a top of the lower treating apparatus, a stacking position of the upper treating apparatus may be corrected.

In addition to the effects as described above, specific effects of the present disclosure will be described together with the detailed description for carrying out the disclosure.

### BRIEF DESCRIPTION OF DRAWINGS

FIG. 1 is a perspective view showing a laundry treating apparatus according to the present disclosure.
FIG. 2 is a simplified diagram showing an internal structure of the laundry treating apparatus according to the present disclosure.
FIG. 3 is a perspective view showing an upper base of an upper treating apparatus according to an embodiment of the present disclosure.
FIG. 4 is a side view showing an upper base of an upper treating apparatus according to an embodiment of the present disclosure.
FIG. 5 is a plan view showing a lower top panel of a lower treating apparatus according to an embodiment of the present disclosure.
FIG. 6 is a side cross-sectional view showing a lower top panel of a lower treating apparatus according to an embodiment of the present disclosure.
FIG. 7 is a partial cross-sectional view showing a stack state of an upper treating apparatus and a lower treating apparatus according to an embodiment of the present disclosure.
FIG. 8 is a partial cross-sectional view showing an upper base and a lower top panel according to an embodiment of the present disclosure.

### DETAILED DESCRIPTIONS

Hereinafter, a laundry treating apparatus according to an embodiment of the present disclosure will be described in detail.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

For simplicity and clarity of illustration, elements in the figures are not necessarily drawn to scale. The same reference numbers in different figures denote the same or similar elements, and as such perform similar functionality. Moreover, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof.

As used herein, the term "and/or" includes any and all combinations of one or more of the associated listed items. Expression such as "at least one of" when preceding a list of elements may modify the entire list of elements and may not modify the individual elements of the list.

First, each of components of a laundry treating apparatus according to an embodiment of the present disclosure will be described in detail with reference to the accompanying drawings.

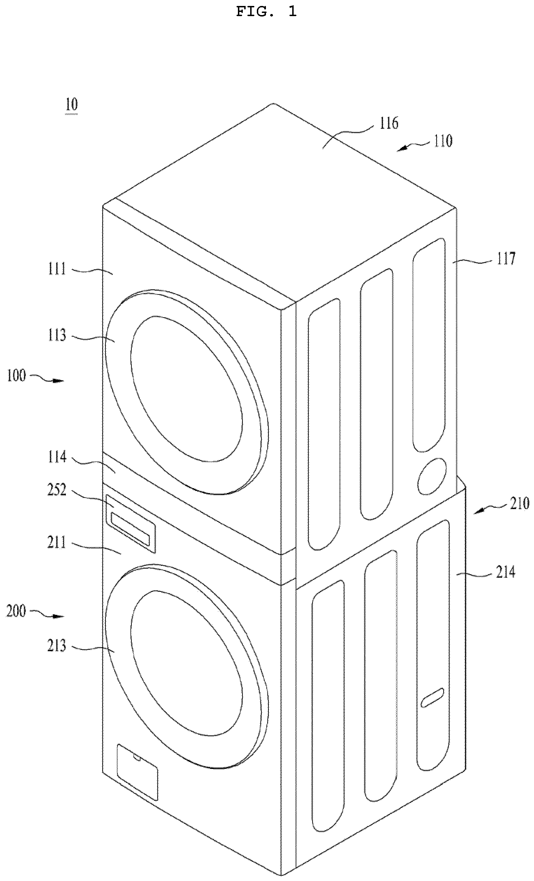

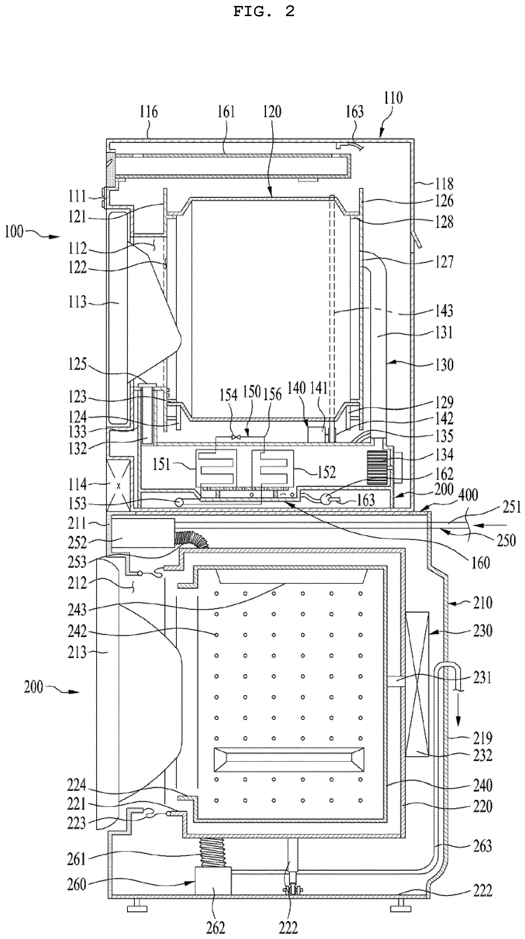

FIG. 1 is a perspective view showing a laundry treating apparatus according to the present disclosure. FIG. 2 is a simplified diagram showing an internal structure of the laundry treating apparatus according to the present disclosure.

As shown in FIG. 1 and FIG. 2, a laundry treating apparatus 10 according to the present disclosure includes a washing apparatus (hereinafter, referred to as 'lower treating apparatus 200') that performs washing and rinsing of an object to be washed (laundry), and a drying apparatus (hereinafter, referred to as 'upper treating apparatus 100') that is mounted on a top of the lower treating apparatus 200 and performs drying of an object to be dried (laundry) that has been washed or needs to be separately dried.

The drying apparatus corresponding to the upper treating apparatus 100 may use a gas burner, an electric heater, a heat pump, etc. as a heat source. Hereinafter, in the present disclosure, an example in which the upper treating apparatus 100 corresponding to the drying apparatus uses the electric heater as the heat source will be described.

However, the present disclosure is not limited thereto. The drying apparatus corresponding to the upper treating apparatus 100 may use the gas burner, the heat pump, etc. as a heat source. That is, as long as when the drying apparatus includes main components of the upper treating apparatus 100, the drying apparatus should be regarded as the upper treating apparatus 100 according to the present disclosure regardless of a type of the heat source of the drying apparatus.

The upper treating apparatus 100 includes an upper cabinet 110 defining an upper appearance thereof and including an upper front panel 111, an upper top panel 116, an upper side panel 117, an upper rear panel 118 and an upper base 300, a drying drum 120 rotatably disposed inside the upper cabinet 110 and receiving and drying an object to be dried using heated air supplied thereto, an air circulating channel 130 for supplying the heated air to the drying drum 120 and for discharging air used for drying the object to be dried out of the drying drum 120, a driver 140 that rotates the drying drum 120 at a predefined rotational speed, a heat-exchanger 150 that heats and supplies air of the air circulating channel 130 and a water discharger 180 that discharges condensate generated from the heat-exchanger 150.

An upper inlet 112 through which the object to be dried is inserted into the drying drum 120 may be defined in the upper front panel 111. An upper door 113 to open and close the upper inlet 112 may be disposed at the upper front panel 111. A control panel 114 for controlling the upper treating apparatus 100 and the lower treating apparatus 200 may be disposed at a lower level of the upper front panel 111.

In this connection, the control panel 114 may include a manipulator (not shown) for simultaneous or selective control of the upper treating apparatus 100 and the lower treating apparatus 200, and a display (not shown) for simultaneous or selective display of operating statuses of the upper treating apparatus 100 and the lower treating apparatus 200.

The upper side panel 117 and the upper rear panel 118 may have separate plate forms or may be formed in an integral manner to each other by bending one panel. The upper side panel 117 and the upper rear panel 118 may be integrally formed to improve a strength of the upper treating apparatus 100.

In this connection, a horizontal bent portion 177a that is bent inwardly of the upper treating apparatus 100 extends from a bottom of the upper side panel 117. A vertical bent portion 177b that is bent upwardly of the upper treating apparatus 100 extends from an end of the horizontal bent portion 177a. A base support portion 177c that is bent inwardly of the upper treating apparatus 100 and is supported on a support protrusion 380 extends from an end of the vertical bent portion 177b.

The upper rear panel 118 may have a service panel (not shown) which defines a rear portion of the upper treating apparatus 100, and opens and closes the upper rear panel 118 for maintenance of the upper treating apparatus 100. Further, an air discharge duct 135 of the air circulating channel 130 to be described later may pass through the upper rear panel 118.

Each of the components (e.g., the drying drum 120, the air circulating channel 130, the driver 140, the heat-exchanger 150, etc.) of the upper treating apparatus 100 is supported and installed on a bottom of the upper cabinet 110. The upper base 300 has a support protrusion 380, a front guide protrusion 381, and a rear guide protrusion 386 for setting an installation position of the upper washing apparatus 100 with respect to the lower washing apparatus 200. The upper base 300 will be described in detail with reference to a separate drawing.

The drying drum 120 may be formed in a cylindrical shape having open front and rear faces. A front plate 121 and a rear plate 126 that rotatably support the drying drum 120 may be disposed in front and rear of the drying drum 120, respectively.

The front plate 121 has an opening 122 defined therein that communicates with the upper inlet 112 defined in the upper front panel 111. The front plate 121 has a front support 123 disposed around an outer circumferential face of the opening 122 and in front of the drying drum 120 and supporting a front inner circumferential face of the drying drum 120.

A front roller 124 is disposed below the front support 123 to rotatably support a front lower portion of the drying drum 120. A plurality of air intake holes 125 through which air from the drying drum 120 is sucked into the air circulating channel 130 are formed in a lower portion of the front plate 121. The air intake duct 133 of the air circulating channel 130 is connected to the air intake holes 125.

The rear plate 126 has a plurality of air supply holes 127 defined therein to which the air supply duct 131 of the air circulating channel 130 to be described later is connected and through which air is supplied into the drying drum 120. A rear support 128 that supports a rear inner circumferential face of the drying drum 120 is disposed outside the air supply hole 127 and in rear of the drying drum 120. A rear roller 129 that rotatably supports a bottom of the drying drum 120 is disposed below the rear support 128.

The air circulating channel 130 includes the air intake duct 133 communicating with the air intake holes 125 to intake air in the drying drum 120, an air supply duct 131 that supplies air from the air intake duct 133 to the drying drum 120, a connection duct 135 which connects the air intake duct 133 and the air supply duct 131 to each other and receives therein a heat-absorber 151 and a heat-emitter 152 of the heat-exchanger 150, and a fan 134 disposed between the air supply duct 131 and the air intake duct 133 to allow the air inside the drying drum 120 to circulate along the air intake duct 133, the connection duct 135 and the air supply duct 131.

In one example, a filter 132 that filters foreign substances such as lint contained in the air sucked from the drying drum 120 may be detachably disposed in the air intake hole 125 of the air intake duct 133. The connection duct 135 may be coupled to the upper base 300 to be described later to define a flow path space in which the heat-absorber 151 and the heat-emitter 152 are installed. Further, the air supply duct 131 guides air respectively dehumidified and heated at the heat-absorber 151 and the heat-emitter 152 disposed in the connection duct 135 to the inside of the drying drum 120.

In this connection, the air inside the drying drum 120 is sucked through the air intake duct 133 into the channel 130 under an operation of the fan 134, thereby reducing a pressure of the drying drum 120. As the pressure of the drying drum 120 decreases, air from the outside of the drying drum 120 is supplied to the inside of the drying drum 120 through the air supply duct 131. In this connection, the air moving through the air supply duct 131 is heated by the heat-exchanger 150 disposed in the connection duct 135 and then supplied to the inside of the drying drum 120.

In this connection, the fan 134 may be placed in either the air intake duct 133, the connection duct 135 or the air supply duct 131. In the present disclosure, an example in which the fan 134 is disposed between the connection duct 135 and the air supply duct 131, that is, located behind the heat-emitter 152 will be described.

The heat-exchanger 150 may be embodied as various devices which may sequentially perform dehumidification and heating of the air introduced into the connection duct 135. In the present disclosure, a case where the heat-exchanger 150 is embodied as a heat pump will be described by way of example.

The heat-exchanger 150 includes a heat-absorber 151 placed inside the connection duct 135 to remove moisture from the air flowing into the connection duct 135, a heat-emitter 152 placed inside the connection duct 135 to heat the air that has passed through the heat-absorber 151, a compressor 153 that compresses refrigerant that has passed through the heat-emitter 152 and supplies the compressed refrigerant to the heat-absorber 151, and a pressure regulator 154 that controls a pressure of the refrigerant that has passed through the heat-emitter 152. The components of the heat-exchanger 150 may be connected to each other via a refrigerant pipe 156 along which the refrigerant flows.

In this connection, each of the heat-absorber 151 and the heat-emitter 152 may be embodied as a plurality of metal plates extending in parallel with a flow direction of air along a width direction of the connection duct 135 or a height direction of the connection duct 135. The heat-absorber 151 and heat-emitter 152 are sequentially arranged in a direction from the air intake duct 133 to the air supply duct 131 and inside the connection duct 135.

The driver 140 is configured to rotate the drying drum 120 at a predefined rotational speed. The driver 140 may have a motor 141 that generates power, a pulley 142 disposed on a rotation shaft of the motor 141, and a belt 145 connecting the pulley 142 and an outer circumferential face of the drying drum 120.

In this connection, the pulley 142 may be disposed on one end of the rotation shaft of the motor 141, and the fan 134 of the air circulating channel 130 may be disposed at the other end of the rotation shaft. That is, one motor 141 may be used to simultaneously operate the fan 134 of the air circulating channel 130 and the drying drum 120. In this case, the drying drum 120 and the fan 134 may be driven by the single motor 141, so that the drying drum 120 and the fan 134 may rotate at a constant rotation speed ratio and at a constant rotation speed.

In another example, although not shown, separate motors (not shown) may be disposed on the drying drum 120 and the fan 134, respectively. When the separate motors are disposed on the drying drum 120 and fan 134, respectively, the rotation speeds of the drying drum 120 and the fan 134 may be individually controlled.

In one example, the water discharger 180 is configured to drain condensate generated from the heat-absorber of the heat-exchanger. The water discharger 180 may include a water storage body 161 that is detachably disposed in the upper cabinet 110 to provide a space for storing water therein, a water discharge pump 162 placed on the upper base 300 to pump the condensate generated from the heat-absorber 151, and a water discharge pipe 163 that guides the condensate pumped from the water discharge pump 162 to the water storage body 161.

In this connection, the water storage body 161 may be embodied as a drawer-type tank which is withdrawn from the upper cabinet 110. A front face of the water storage body 161 may define a portion of the upper front panel 111.

In the above-described upper treating apparatus 100, as the object to be dried is injected into the drying drum 120 through the upper inlet 112, the drying drum 120 is rotated by the driver 140, and thus the object to be dried inside the drying drum 120 moves.

Further, as the fan 134 is rotated by the driver 140, the air inside the drying drum 120 is circulated along the air intake duct 133 and the air supply duct 131, and is heated by the heat-exchanger placed in the connection duct and then supplied to the drying drum 120.

The lower treating apparatus 200 includes a lower cabinet 210 defining a lower appearance thereof, and including a lower front panel 211, a lower side panel 214, a lower rear panel 219, a lower top panel 400, and a lower base panel 219a, a tub 220 disposed inside the lower cabinet 210 to store washing-water therein, a washing drum 240 that is rotatably disposed inside the tub 220 to wash the input washing target, a driver 230 which is disposed in rear of the tub 220 to rotate the washing drum 240, a water supply 250 that supplies washing-water to the tub 220, a detergent supply 252 that mixes detergent and the washing-water supplied from the water supply with each other to supply the mixture to the washing drum, and a water discharger 260 that drains the washing-water inside the tub 220.

The lower front panel 211 has a lower inlet 212 defined therein through which the object to be washed is input into the washing drum 240. A lower door 213 for opening and closing the lower inlet 212 is disposed on the lower front panel 211.

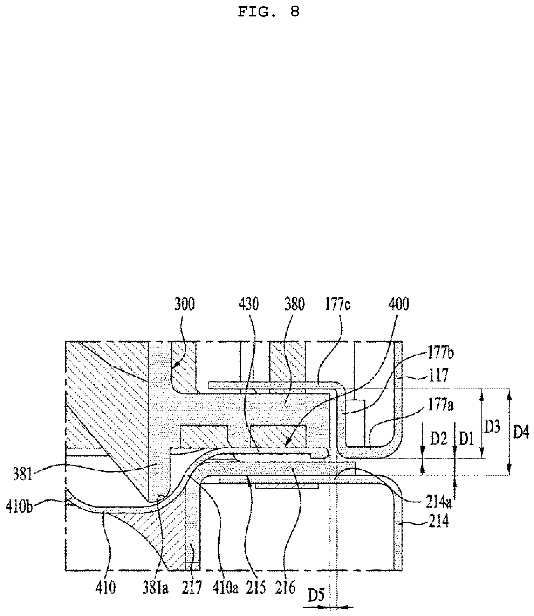

A lower horizontal bent portion 214a (see Fig. 8) is bent inwardly of the lower treating apparatus 200 from a top of the lower side panel 214. The support protrusion 380 of the upper base 300 and the base support portion 177c of the upper side panel 117 are sequentially seated on the lower horizontal bent portion 214a.

Further, a reinforcing frame 215 which may increase a strength of a top of the lower side panel 214 is seated on the lower horizontal bent portion 214a. The support protrusion 380 of the upper base 300 is seated on the reinforcing frame 215.

In this connection, reinforcing frame 215 may have a horizontal frame 216 seated on a top face of the lower side panel 214 and a vertical frame 217 extending vertically and downwards from an inner end of the horizontal frame 216.

The lower side panel 214 and the lower rear panel 219 may be provided in separate plate form, or may be formed integrally to each other by bending one panel. The lower side panel 214 and the lower rear panel 219 may be integrally formed to improve strength of the lower treating apparatus 200.

The lower front panel 211 and the lower side panel 214 as above-described and the upper front panel 111 and the upper side panel 117 may constitute the same vertically extending layers, respectively. That is, the lower front panel 211, the upper front panel 111 and the control panel 114 located at a lower portion of the upper front panel 111 may constitute the same vertically extending layer.

Further, the upper side panel 117 and the lower side panel 214 define left and right sides of the upper treating apparatus 100 and the lower treating apparatus 200, respectively, and may constitute the same vertically extending layers.

In one example, the lower top panel 400 is located on a top of the lower front panel 211 and the lower side panel 214 and serves to separate the lower treating apparatus 200 and the upper treating apparatus 100 from each other, and at the same time, to support and align the upper treating apparatus 100 with respect to the lower treating apparatus 200.

Further, when a fire accident occurs in the lower treating apparatus 200 or the upper treating apparatus 100, the lower top panel 400 may serve as a flameproof panel to prevent the fire from one of the lower treating apparatus 200 and the upper treating apparatus 100 from being transferred to the other thereof.

Further, the lower top panel 400 may have a front guide groove 410 and a rear guide groove 420 defined therein respectively at positions corresponding to positions of the front guide protrusion 381 and the rear guide protrusion 386 formed on the upper base 300 to set the installation position of the upper treating apparatus 100. The lower top panel 400 will be described in detail with reference to a separate drawing.

The lower rear panel 219 may have a service panel (not shown) which defines a rear portion of the lower treating apparatus 200, and which opens and closes the lower rear panel 219 for maintenance of the lower treating apparatus 200. Further, a water supply pipe 251 of the water supply 250 and a water discharge pipe 263 of the water discharger 260 to be described later may pass through the lower rear panel 219.

In one example, the upper treating apparatus 100 is disposed on the top of the lower treating apparatus 200 according to the present disclosure. The top face of the lower treating apparatus 200 is covered with the upper treating apparatus 100.

The tub 220 is disposed inside the lower cabinet 210 and is formed in a cylindrical shape and is mounted via a suspension 222 such as a spring and a damper. A tub opening 221 that communicates with the lower inlet 212 formed in the lower front panel 211 is formed in a front face of the tub 220. The lower inlet 212 of the lower front panel 211 and the tub opening 221 may further have a bellows type gasket 223 to maintain water-tightness when the tub 220 moves.

The driver 230 is disposed on a rear face of the tub 220 to rotate the washing drum 240, and has an outer rotor type motor 232 disposed on the rear face of the tub 220 and a rotation shaft 231 that passes through the rear face of the tub 220 and transmits the rotational force of the motor 232.

The washing drum 240 is disposed in inside the tub 220 and is formed in a cylindrical shape and is connected to the rotation shaft 231 so that the drum 240 rotates. The washing drum 240 has a drum opening 241 defined in a front face thereof communicating with the tub opening 221 formed in the tub 220. The object to be washed is injected through the drum opening 241 to the drum 240. Further, a plurality of water communication holes 242 for flowing the washing-water may be defined in an inner circumferential face of the washing drum 240. A plurality of lifters 243 for moving the object to be washed may be disposed in the washing drum 240.

The water supply 250 receives washing-water from an external water supply source (not shown) to the laundry treating apparatus 10. The water supply 250 includes a water supply pipe 251 to which the external water supply source is connected, and a detergent supply 252 connected to the water supply pipe 251 and mixing the water and detergent and supplying the mixture to the tub 220, and a water supply hose 253 connecting the detergent supply 252 and the tub 220 to each other.

The water discharger 260 is disposed under the tub 220 to drain the washing-water that has been used in the tub 220. The water discharger 260 includes a water discharge hose 261 connected to a bottom face of the tub 220, the water discharge pump 262 disposed at the water discharge hose 261 to pump the washing-water, and a water discharge pipe 253 to discharge the washing-water pumped by the water discharge pump 262 to the outside.

In the lower treating apparatus 200 as described above, as the object to be washed is introduced into the washing drum 240 through the lower inlet 212, the detergent and washing-water are supplied to the tub 220 from the water supply 250. As the washing drum 240 rotates by the driver 230, the object to be washed inside the washing drum 240 moves and the washing process proceeds.

Further, as the washing process is completed, the washing-water inside the tub 220 is discharged to the outside of the lower treating apparatus 200 by the water discharge pump 262 of the water discharger 260, thereby completing the washing process.

In one example, the lower treating apparatus 200 is installed on an installation place, and then the upper treating apparatus 100 is seated on the top of the lower treating apparatus 200, thereby completing the installation of the laundry treating apparatus 10.

Hereinafter, the upper base 300 of the upper treating apparatus 100 according to an embodiment of the present disclosure will be described in detail with reference to the accompanying drawings.

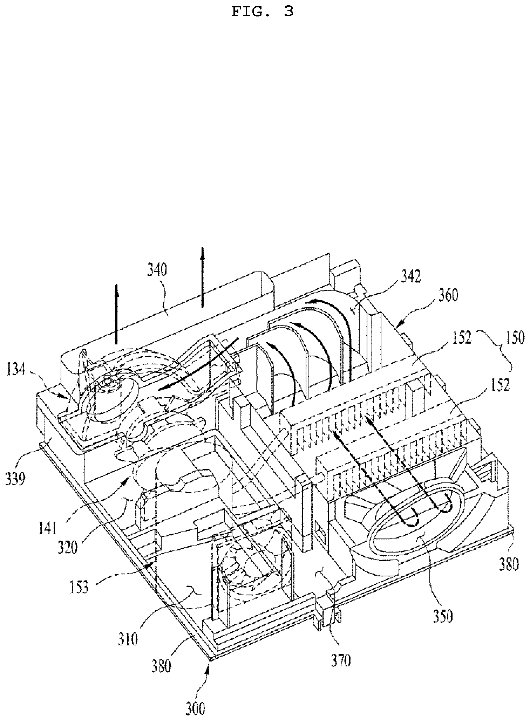

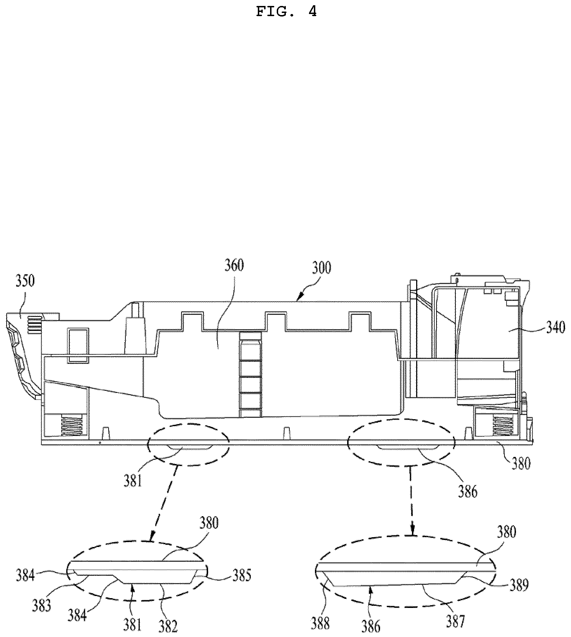

FIG. 3 is a perspective view showing the upper base of the upper treating apparatus according to an embodiment of the present disclosure. FIG. 4 is a side view showing the upper base of the upper treating apparatus according to an embodiment of the present disclosure.

As shown, the upper base 300 according to an embodiment of the present disclosure includes a compressor receiving portion 310 on which the compressor 153 of the heat-exchanger 150 is installed, a fan receiving portion 330 on which the fan 134 of the heat-exchanger 150 is mounted, and an air supply duct connector 340 to which the air supply duct 131 is connected, an air intake duct connector 350 to which the air intake duct 133 is connected, a water collector 360 connected to the connection duct 135 and the air intake duct connector 350 and thus connected to the heat-absorber 151 and the heat-emitter 152 of the heat-exchanger 150, wherein the condensate generated from the heat-absorber 151 is stored in the collector 360, and a water discharge pump receiving portion 370 on which a water discharge pump 162 to drain the water collected from the water collector 360 is installed.

The compressor receiving portion 310, the motor receiving portion 320, the fan receiving portion 330, the water collector 360, the water discharge pump receiving portion 370, etc. of the upper base 300 may be variously arranged according to connections of the components and configurations of flow paths therebetween.

In one example, the water collector 360 is formed in a shape of a casing whose front and rear ends are opened. Thus, the water collector 360 is connected to and communicates with the connection duct 135. The heat-absorber 151 and the heat-emitter 152 may be located at a position at which the water collector 360 and the connection duct 135 are connected to each other.

In this connection, the air intake duct connector 350 to which the air intake duct 133 is connected may be located at the front end of the water collector 360. The air supply duct connector 340 may be located at the rear end of the water collector 360. Further, between the water collector 360 and the air supply duct 131, a switch channel 342 may be further formed to switch a direction of the air passing through the heat-absorber 151 and the heat-emitter 152 of the water collector toward the air supply duct 131.

In one example, a support protrusion 380 to maintain a spacing between the upper treating apparatus 100 and the lower treating apparatus 200 may protrude from a lower portion of an outer face of the upper base 300. The support protrusion 380 is interposed between the upper treating apparatus 100 and the lower treating apparatus 200 to allow an electrical insulation state between the upper treating apparatus 100 and the lower treating apparatus 200.

In one example, a pair of front guide protrusions 381 and a pair of rear guide protrusions 386 may be formed on both sides of a bottom face of the upper base 300. The pair of front guide protrusions 381 and the pair of rear guide protrusions 386 may be seated on the lower top panel 400 when the upper treating apparatus 100 is seated on the top face of the lower treating apparatus 200.

In this connection, the pair of front guide protrusions 381 and the pair of rear guide protrusions 386 may protrude downward from the bottom face of the support protrusion 380 toward the lower washing apparatus 200.

Alternatively, the pair of front guide protrusions 381 and the pair of rear guide protrusions 386 may not directly protrude from the support protrusion 380. The support protrusion 380 may extend from an outer face of the upper base 300 and may be disposed above the pair of front guide protrusion 381 and the pair of rear guide protrusion 386.

In one example, the front guide protrusions 381 may be arranged in a symmetrical manner in the left and right direction of the upper base 300 and may be formed on a front portion of a bottom face of the support protrusion 380. Each front guide protrusion 381 has a front guide face 382 as a bottom face, and an auxiliary guide face 383 that is located a higher level than a level of the front guide face 382.

In this connection, a first rear inclined face 384 that is inclined upwards toward a rear portion of the upper base 300 may be formed on a rear end of the front guide face 382. A first front inclined face 384 is formed between the front guide face 382 and the auxiliary guide face 383. A further first front inclined face 384 is formed at a front end of the auxiliary guide face 383. The first front inclined face 384 is inclined upwards toward a front portion of the upper base 300.

In this connection, the front guide face 382 and the auxiliary guide face 383 are temporarily seated on one face of the front guide groove 410 formed in the lower top panel 400 of the lower treating apparatus 200 when the upper treating apparatus 100 is seated on the lower treating apparatus 200.

In particular, the auxiliary guide face 383 may be temporarily supported on the lower top panel 400 while the front guide face 382 is partially inserted into the front guide groove 410 before the front guide protrusion 381 is completely inserted into the front guide groove 410.

In one example, when the upper treating apparatus 100 is seated on the lower treating apparatus at a correct position thereof, the front guide face 382 and the auxiliary guide face 383 may be located inside the front guide groove 410 formed in the lower top panel 400, and each front guide protrusion 381 may be inserted into each front guide groove 410.

In one example, when the upper treating apparatus 100 is seated on the lower treating apparatus 200, and when each front guide protrusion 381 is spaced from each front guide groove 410 in a rear and front direction, the first front inclined face 384 and the first rear inclined face 385 may allow each front guide protrusion 381 to slide and move into each front guide groove 410.

Further, an outer edge of the front guide face 382 of each front guide protrusion 381, that is, a front outer edge of the upper base 300 may be formed as a curved face 381a that is curved inwardly of the upper base 300 or an inclined face (not shown) which is inclined inwardly of the upper base 300 (refer to FIG. 8).

In this connection, when the upper treating apparatus 100 is misaligned with the lower treating apparatus 200 in the left-right direction, the curved face 381a formed on the front guide face 382 may slide along the inner face of the front guide groove 410.

In one example, the rear guide protrusions 386 may be arranged in a symmetrical manner in the left and right direction of the upper base 300 and may be disposed on a rear portion of the bottom face of the support protrusion 380. Each rear guide protrusion 386 has a rear guide face 387 as a bottom face thereof.

In this connection, a second rear inclined face 389 that is inclined upwards toward a rear portion of the upper base 300 may be formed on a rear end of the rear guide face 387. A second front inclined face 388 that is inclined upwards toward the front portion of the upper base 300 may be formed on a front end of the rear guide face 387.

In one example, when the upper treating apparatus 100 is seated on the lower treating apparatus at the correct position thereof, the rear guide face 387 may be located inside the rear guide groove 420 formed in the lower top panel 400, and each rear guide protrusion 386 may be inserted into each rear guide groove 420.

In this connection, when the upper treating apparatus 100 is seated on the lower treating apparatus 200 and when each rear guide protrusion 386 is spaced from each rear guide groove 420 in the front and rear direction, the second front inclined face 388 and the second rear inclined face 389 may allow each rear guide protrusion 386 to slide and move into each rear guide groove 420.

Further, an outer edge of the rear guide face 387 of each rear guide protrusion 386, that is, a rear outer edge of the upper base 300 may be as a curved face 386a that is curved inwardly of the upper base 300 or an inclined face (not shown) which is inclined inwardly of the upper base 300 (See FIG. 8).

In this connection, when the upper treating apparatus 100 is misaligned with the lower treating apparatus 200 in the left and right direction, the curved face 386a formed on the rear guide face 387 may slide along the inner face of the rear guide groove 420.

In one example, the heat-exchanger 150 including the heat-absorber 151, the heat-emitter 152, and the compressor 153 installed on the upper base 300 is configured to operate at a relatively low temperature. Accordingly, the upper base 300 may not have a flame retardant or heat dissipation function.

Therefore, the upper base 300 may be manufactured integrally via injection molding which is a relatively easy manufacturing scheme. The upper base 300 may be integrally injection-molded and is made of a synthetic resin material, for example, ABS material, PC material, plastic, etc.

That is, the compressor receiving portion 310, the motor receiving portion 320, the fan receiving portion 330, the water collector 360, the water discharge pump receiving portion 370 formed on the top face of the upper base 300 may be integrally formed with each other via injection molding.

Further, the support protrusion 380, the pair of front guide protrusions 381, and the pair of rear guide protrusions 386 as above-described may be made of the same material as that of the upper base 300 and may be integrally injection-molded on a side face and a top face of the upper base 300 when manufacturing the upper base 300.

Hereinafter, the lower top panel 400 of the lower treating apparatus 200 according to an embodiment of the present disclosure will be described in detail with reference to the accompanying drawings.

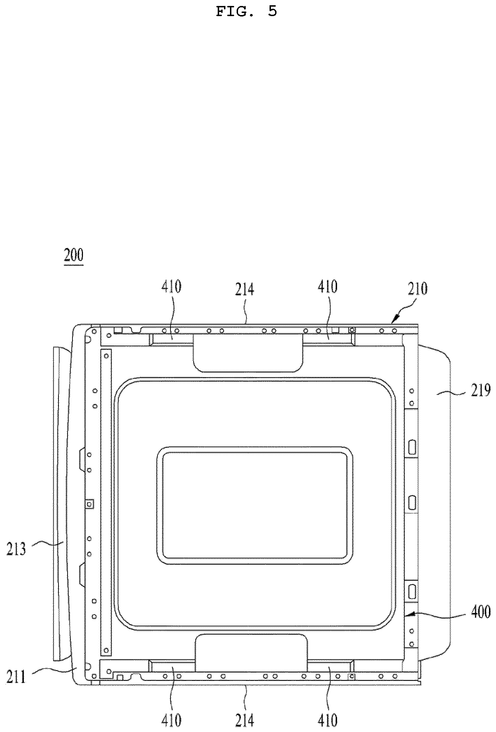

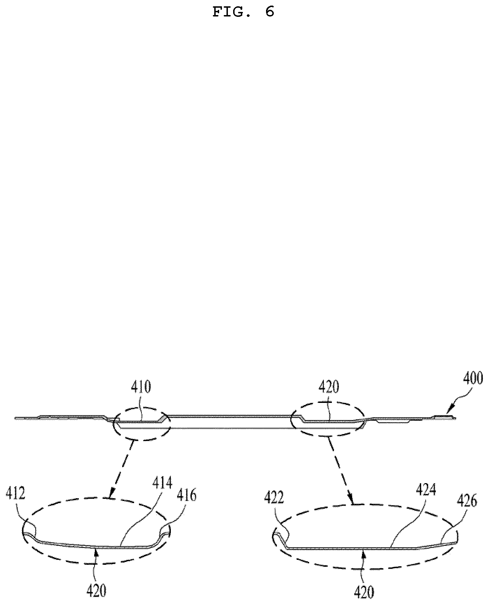

FIG. 5 is a plan view showing the lower top panel of the lower treating apparatus according to an embodiment of the present disclosure. FIG. 6 is a side cross-sectional view showing the lower top panel of the lower treating apparatus according to an embodiment of the present disclosure.

In one example, the lower top panel 400 of the lower treating apparatus 200 has a pair of front guide grooves 410 defined in both sides of a front portion thereof at positions corresponding to the positions of the front guide protrusions 381 formed on the upper base 300. The lower top panel 400 of the lower treating apparatus 200 has a pair of rear guide grooves 420 defined in both sides of a rear portion thereof at positions corresponding to the positions of the rear guide protrusions 386 formed on the upper base 300.

Further, a support face 430 interposed between the upper side panel 117 and the lower side panel 214 may be formed on an outer edge portion of the lower top panel 400. In this connection, the support face 430 may support the support protrusion 380 of the upper base 300 and may be interposed between the upper side panel 117 and the lower side panel 214 as the support protrusion 380 may.

In this connection, the front guide groove 410 has a first guide face 414 so that the front guide protrusion 381 formed on the upper base 300 is seated thereon. In front of the first guide face 414, a first front inclined face 412 that is inclined downwards from a top face of the lower top panel 400 to the first guide face 414 is formed. In rear of the first guide face 414, a first rear inclined face 416 that is inclined downwards from the top face of the lower top panel 400 to the first guide face 414 is formed.

In this connection, the first front inclined face 412 and the first rear inclined face 416 may allow the front guide protrusion 381 of the upper base 300 to slide such that the front guide protrusion 381 is inserted into the front guide groove 410.

In one example, the rear guide groove 420 has a second guide face 424 so that the rear guide protrusion 386 formed on the upper base 300 is seated thereon. In front of the second guide face 424, a second front inclined face 422 that is inclined downward from the top face of the lower top panel 400 to the second guide face 424 is formed. In rear of the second guide face 424, a second rear inclined face 426 that is inclined downward from the top face of the lower top panel 400 to the second guide face 424 is formed.

In this connection, the second front inclined face 422 and the second rear inclined face 426 may allow the front guide protrusion 381 of the upper base 300 to slide so that the front guide protrusion 381 is inserted into the front guide groove 410.

Hereinafter, a process in which the upper treating apparatus 100 according to an embodiment of the present disclosure is seated on the lower treating apparatus 200 will be described in detail with reference to the accompanying drawings.

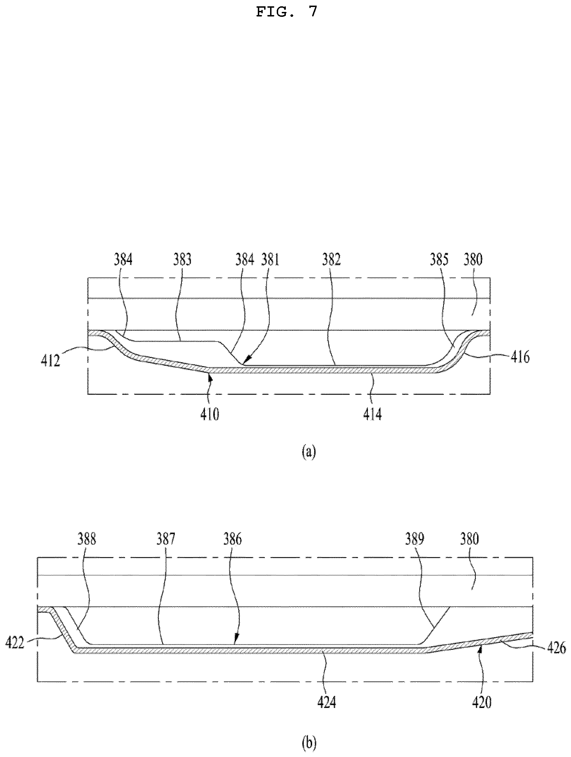

FIG. 7 is a partial cross-sectional view showing a staked state of an upper treating apparatus and a lower treating apparatus according to an embodiment of the present disclosure. FIG. 8 is a partial cross-sectional view showing the upper base and the lower top panel according to an embodiment of the present disclosure.

As shown, according to the present disclosure, when the upper treating apparatus 100 is stacked on the lower treating apparatus 200, the support protrusion 380 formed on the upper base 300 is interposed between the lower side panel 214 of the lower treating apparatus 200 and the upper side panel 117 of the upper treating apparatus 100 to support the upper side panel 117 with respect to the lower side panel 214.

In this connection, the front guide protrusion 381 of the upper base 300 is inserted into the front guide groove 410 of the lower top panel 400. The rear guide protrusion 386 of the upper base 300 is inserted into the rear guide groove 420 of the lower top panel 400.

In this connection, the first front inclined face 384 or the first rear inclined face 385 of the front guide protrusion 381 may slide on and along the first front inclined face 412 or the first rear inclined face 416 of the front guide groove 410 so that the front guide protrusion 381 may be inserted into the front guide groove 410.

Further, the second front inclined face 388 or the second rear inclined face 389 of the rear guide protrusion 386 may slide on and along the second front inclined face 422 or the second rear inclined face 426 of the rear guide groove 420 so that the rear guide protrusion 386 may be inserted into the rear guide groove 420.

In one example, the lower top panel 400 as described above may be manufactured by press molding a metal plate of a predetermined thickness. Further, the front guide groove 410 and the rear guide groove 420 formed in the lower top panel 400 may be formed via press-molding when manufacturing the lower top panel 400.

In this connection, as long as the lower top panel 400 performs strength-increasing and fire-retardant functions while supporting the upper treating apparatus 100, the lower top panel 400 may be made of other materials than the metal plate, and may be manufactured by methods other than the press-molding of the metal plate.

For example, the lower top panel 400 may be manufactured by injection molding of a synthetic resin material having a flame retardant function. During the injection molding, the front guide groove 410 and the rear guide groove 420 may be integrally formed with the lower top panel 400.

In one example, as shown in FIG. 8, predefined spacings for insulation between the upper treating apparatus 100 and the lower treating apparatus 200 may be formed between the support protrusion 380 of the upper base 300, the lower top panel 400, the upper side panel 117, and the lower side panel 214.

First, the upper horizontal bent portion 177a of the upper side panel 117 and the lower horizontal bent portion 214a of the lower side panel 214 may be spaced apart from each other by a first spacing D2. Further, when the reinforcing frame 215 is disposed on the lower side panel 214, the horizontal frame 216 of the reinforcing frame 215 and the upper horizontal bent portion 177a of the upper side panel 117 may be spaced from each other by a second spacing D2 smaller than the first spacing D1.

In this connection, the first spacing D1 and the second spacing D2 may be a spacing between the upper side panel 117 and the lower side panel 214 and thus act as the insulating spacing between the upper treating apparatus 100 and the lower treating apparatus 200.

In one example, the base support portion 177c of the upper side panel 117 may have a third spacing D3 from the upper horizontal bent portion 177a of the upper side panel 117. The third spacing D3 may be smaller than a sum of a thickness of the support protrusion 380 of the upper base 300 and a thickness of the support face 430 of the lower top panel 400.

Therefore, the horizontal bent portion 177a of the upper side panel 117 may be spaced apart from and thus may be insulated from the lower horizontal bent portion 214a of the lower side panel 214 when the base support portion 177c is supported on the support protrusion 380.

In this connection, when the reinforcing frame 215 is further disposed on the lower side panel 214, the base support portion 177c of the upper side panel 117 may have a fourth spacing D4 from the lower horizontal bent portion 214a of the lower side panel 214.

In one example, the fourth spacing D4 may be equal to a sum of a thickness of the support protrusion 380 of the upper base 300, a thickness of the support face 430 of the lower top panel 400, and a thickness of the horizontal frame 216 of the reinforcing frame 215. The horizontal bent portion 177a of the side panel 117 may have the first spacing D1 from the lower horizontal bent portion 214a.

In this connection, the first spacing D1 may be the spacing between the lower horizontal bent portion 214a of the lower side panel 214 and the upper horizontal bent portion 177a of the upper side panel 117 as described above. As shown, the first spacing D1 may be larger than a thickness of the horizontal frame 216 of the reinforcing frame 215.

In one example, the support face 430 interposed between the upper side panel 117 and the lower side panel 214 may be spaced apart from the vertical bent portion 177b of the upper side panel 117 by a fifth spacing D5. The fifth spacing D5 between the support face 430 and the vertical bent portion 177b may act as an insulating space between the lower treating apparatus 200 and the upper side panel 117.

As described above, the support protrusion 380 may be spaced from the vertical bent portion 177b inward of the horizontal bent portion 177a of the upper side panel 117 by a predetermined spacing. The base support portion 177c may be placed on a top of the support protrusion 380.

As a result, the support protrusion 380 may be spaced apart from the vertical bent portion 177b of the upper side panel 117 by a predetermined spacing and may be positioned inwardly of the upper side panel or inwardly of the horizontal bent portion 177b. Further, the support protrusion 380 may be disposed under the base support portion 177c while being spaced apart by a predetermined spacing from the vertical bent portion 177b.

Therefore, in the stack-type laundry treating apparatus 10 according to the present disclosure as described above, when the upper treating apparatus 100 is stacked on a top of the lower treating apparatus 200, the front guide protrusion 381 and the rear guide protrusion 386 formed on the upper base 300 of the upper treating apparatus 100 are respectively inserted into the front guide groove 410 and the rear guide groove 420 formed in the lower top panel 400 of the lower treating apparatus 200. Thus, the upper treating apparatus 100 may be stacked on and in an aligned state with respect to the lower treating apparatus 200.

Further, in the stack-type laundry treating apparatus 10 according to the present disclosure as described above, the plurality of spacings for insulation are formed between the upper side panel of the upper treating apparatus and the lower side panel of the lower treating apparatus. In this way, the upper treating apparatus and the lower treating apparatus may be insulated from each other.

## Claims

1. A stack-type laundry treating apparatus comprising:
an upper treating apparatus (100) including:
an upper cabinet (110) defining an upper appearance of the laundry treating apparatus, and including an upper base (300);
a drying drum (120) rotatably disposed in the upper cabinet (110),;
an upper driver (140) disposed on the upper base (300) for rotating the drying drum (120); and
an air flow path (130) for supplying and discharging air to and from the drying drum (120), and
a lower treating apparatus (200) including:
a lower cabinet (210) defining a lower appearance of the laundry treating apparatus and including a lower top panel (400) on which the upper base (300) is mounted;
a tub (220) disposed in the lower cabinet (210) for storing washing-water;
a washing drum (240) disposed inside the tub (220); and
a lower driver (230) for rotating the washing drum (240),
wherein a support protrusion (380) is formed on a bottom portion of the upper base (300) to support the upper cabinet (110) with respect to the lower cabinet (210),
wherein the upper cabinet (110) has an upper side panel (117) defining a side face of the upper treating apparatus (100), and the lower cabinet (210) has a lower side panel (214) defining a side face of the lower treating apparatus (200),
wherein the support protrusion (380) is interposed between the upper side panel (17) and the lower side panel (214) to support the upper treating apparatus (100),
**characterized in that**:
the upper base (300) is made of a synthetic resin material;
the upper side panel (117) includes an upper horizontal bent portion (177a) horizontally extending from a bottom of the upper side panel (117) to an inside of the upper treating apparatus (100); and
the support protrusion (380) is disposed inwardly of the upper horizontal bent portion (177a).

2. The stack-type laundry treating apparatus of claim 1, wherein the upper side panel (117) has a vertical bent portion (177b) bent upward from an end of the horizontal bent portion (177a), and a base support portion (177c) bent from the end of the vertical bent portion (177b) to an upper portion of the support protrusion (380),
wherein the base support portion (177c) is positioned on the support protrusion (380).

3. The stack-type laundry treating apparatus of claim 2, wherein the lower top panel (400) has a support face (430) interposed between the lower side panel (214) and the support protrusion (380) to support the support protrusion (380), and wherein an outer end of the support face (430) is spaced apart by a predetermined spacing from the vertical bent portion (177b).

4. The stack-type laundry treating apparatus of claim 3, wherein the lower side panel (214) has a lower horizontal bent portion (214a) horizontally extending from a top of the lower side panel (214) and inwardly of the lower treating apparatus (200),
wherein the support face (430) is disposed on the lower horizontal bent portion (214a).

5. The stack-type laundry treating apparatus of claim 4, wherein the upper horizontal bent portion (177a) and the lower horizontal bent portion (214a) are spaced from each other by a first spacing for insulation.

6. The stack-type laundry treating apparatus of claim 5, wherein a reinforcing frame (215) is further disposed on the top of the lower side panel (214),
wherein the reinforcement frame includes a horizontal frame (216) seated on a top face of the lower horizontal bent portion (214a), and a vertical frame (217) extending downward from an inner end of the horizontal frame (216).

7. The stack-type laundry treating apparatus of claim 6, wherein the horizontal frame (216) is located between the lower horizontal bent portion (214a) and the support face (430), wherein the horizontal frame (216) and the upper horizontal bent portion (177a) are spaced apart from each other by a second spacing smaller than the first spacing.

8. The stack-type laundry treating apparatus of any one of claims 1 to 7, wherein the support protrusion (380) includes a guide protrusion protruding toward the lower top panel (400),
wherein the lower top panel (400) has a guide groove defined therein at a position corresponding to a position of the guide protrusion, wherein the guide protrusion is inserted into the guide groove, and
wherein the guide groove is adjacent to the lower side panel (214) and is recessed inwardly of the lower treating apparatus (200).

9. The stack-type laundry treating apparatus of claim 8, wherein the guide protrusion includes:
a pair of front guide protrusions (381) respectively formed on both sides of a front portion of a bottom face of the upper base; and
a pair of rear guide protrusions (386) respectively formed on both sides of a rear portion of the bottom face of the upper base (300),
wherein the guide groove includes:
a pair of front guide grooves (410) recessed in the lower top panel (400) in positions corresponding to positions of the pair of front guide protrusions (381); and
a pair of rear guide grooves (420) recessed in the lower top panel (400) in positions corresponding to positions of the pair of rear guide protrusions (386).

10. The stack-type laundry treating apparatus of claim 9, wherein the front guide protrusion (381) has:
a front guide face (382) defining a bottom face thereof;
a front inclined face (384) inclined upward from a front end of the front guide face (382) to a bottom face of the upper base (300); and
a rear inclined face (385) inclined upward from a rear end of the front guide face (382) to the bottom face of the upper base (300),
wherein the front guide groove (410) has:
a guide face (414) defining a bottom face thereof;
a front inclined face (412) inclined upward from a front end of the guide face (414) to a top face of the lower top panel (400); and
a rear inclined face /416) inclined upward from a rear end of the guide face (414) to the top face of the lower top panel (400).

11. The stack-type laundry treating apparatus of claim 10, wherein the front inclined face (384) has an auxiliary guide face (383) positioned at a level higher than a level of the front guide face (382).

12. The stack-type laundry treating apparatus of claim 10, or 11, wherein an outer edge of the front guide face (382) or the rear guide face (387) has a curved face.

13. The stack-type laundry treating apparatus of claim 9, wherein the support protrusion (380) extends outwardly from an outer face of the upper base (300), wherein the guide protrusion extends downward from one end of the support protrusion (380).

## Patentansprüche

1. Stapelartige Wäschebehandlungsvorrichtung, welche aufweist:
eine obere Behandlungsvorrichtung (100), welche aufweist:
ein oberes Gehäuse (110), das ein oberes Erscheinungsbild der Wäschebehandlungsvorrichtung definiert und eine obere Basis (300) aufweist;
eine Trockungstrommel (120), die drehbar in dem oberen Gehäuse (110) angeordnet ist;
ein oberes Antriebssystem (140), das auf der oberen Basis (300) angeordnet ist, um die Trockungstrommel (120) zu drehen; und
einen Luftströmungsweg (130) zum Zuführen und Ausleiten von Luft an die bzw. aus der Trockungstrommel (120), und
eine untere Behandlungsvorrichtung (200), welche aufweist:
ein unteres Gehäuse (210), das ein unteres Erscheinungsbild der Wäschebehandlungsvorrichtung definiert und eine untere Deckplatte (400) aufweist, an der die obere Basis (300) angebracht ist;
eine in dem unteren Gehäuse (210) angeordneten Wanne (220) zum Speichern von Waschwasser;
eine Waschtrommel (240), die im Inneren der Wanne (220) angeordnet ist; und
ein unteres Antriebssystem (230) zum Drehen der Waschtrommel (240),
wobei ein Stützvorsprung (380) an einem unteren Abschnitt der oberen Basis (300) ausgebildet ist, um das obere Gehäuse (110) in Bezug auf das untere Gehäuse (210) zu stützen,
wobei das obere Gehäuse (110) eine obere Seitenwand (117) aufweist, die eine Seitenfläche der oberen Behandlungsvorrichtung (100) definiert, und das untere Gehäuse (210) eine untere Seitenwand (214) aufweist, die eine Seitenfläche der unteren Behandlungsvorrichtung (200) definiert,
wobei der Stützvorsprung (380) zwischen der oberen Seitenwand (17) und der unteren Seitenwand (214) eingefügt ist, um die obere Behandlungsvorrichtung (100) zu stützen,
**dadurch gekennzeichnet, dass**:
die obere Basis (300) aus einem Kunstharzmaterial hergestellt ist;
die obere Seitenwand (117) einen oberen horizontalen gebogenen Abschnitt (177a) aufweist, der sich horizontal von einer Unterseite der oberen Seitenwand (117) zu einem Inneren der oberen Behandlungsvorrichtung (100) erstreckt; und
der Stützvorsprung (380) von dem oberen horizontalen gebogenen Abschnitt (177a) nach innen angeordnet ist.

2. Stapelartige Wäschebehandlungsvorrichtung nach Anspruch 1, wobei die obere Seitenwand (117) einen vertikalen gebogenen Abschnitt (177b), der von einem Ende des horizontalen gebogenen Abschnitts (177a) nach oben gebogen ist, und einen Basisstützabschnitt (177c) aufweist, der von dem Ende des vertikalen gebogenen Abschnitts (177b) zu einem oberen Abschnitt des Stützvorsprungs (380) gebogen ist,
wobei der Basisstützabschnitt (177c) auf dem Stützvorsprung (380) positioniert ist.

3. Stapelartige Wäschebehandlungsvorrichtung nach Anspruch 2, wobei die untere Deckplatte (400) eine Stützfläche (430) aufweist, die zwischen der unteren Seitenplatte (214) und dem Stützvorsprung (380) angeordnet ist, um den Stützvorsprung (380) zu stützen, und wobei ein äußeres Ende der Stützfläche (430) um einem vorbestimmten Abstand von dem vertikalen gebogenen Abschnitt (177b) beabstandet ist.

4. Stapelartige Wäschebehandlungsvorrichtung nach Anspruch 3, wobei die untere Seitenwand (214) einen unteren horizontalen gebogenen Abschnitt (214a) aufweist, der sich horizontal von einer Oberseite der unteren Seitenwand (214) und nach innerhalb der unteren Behandlungsvorrichtung (200) erstreckt,
wobei die Stützfläche (430) auf dem unteren horizontalen gebogenen Abschnitt (214a) angeordnet ist.

5. Stapelartige Wäschebehandlungsvorrichtung nach Anspruch 4, wobei der obere horizontale gebogene Abschnitt (177a) und der untere horizontale gebogene Abschnitt (214a) um einen ersten Abstand zur Isolierung voneinander beabstandet sind.

6. Stapelartige Wäschebehandlungsvorrichtung nach Anspruch 5, wobei ferner ein Verstärkungsrahmen (215) oben auf der unteren Seitenwand (214) angeordnet ist,
wobei der Verstärkungsrahmen einen horizontalen Rahmen (216), der auf einer oberen Fläche des unteren horizontalen gebogenen Abschnitts (214a) liegt, und einen vertikalen Rahmen (217), der sich von einem inneren Ende des horizontalen Rahmens (216) nach unten erstreckt, aufweist.

7. Stapelartige Wäschebehandlungsvorrichtung nach Anspruch 6, wobei der horizontale Rahmen (216) zwischen dem unteren horizontalen gebogenen Abschnitt (214a) und der Stützfläche (430) angeordnet ist, wobei der horizontale Rahmen (216) und der obere horizontale gebogene Abschnitt (177a) um einen zweiten Abstand voneinander beabstandet sind, der kleiner als der erste Abstand ist.

8. Stapelartige Wäschebehandlungsvorrichtung nach einem der Ansprüche 1 bis 7, wobei
der Stützvorsprung (380) einen vorstehenden Führungsabschnitt aufweist, der in Richtung der unteren Deckplatte (400) vorsteht,
wobei die untere Deckplatte (400) eine Führungsnut aufweist, die darin an einer Position definiert ist, die einer Position des Führungsvorsprungs entspricht, wobei der Führungsvorsprung in die Führungsnut eingeführt wird, und
wobei die Führungsnut an die untere Seitenwand (214) angrenzt und zur Innenseite der unteren Behandlungsvorrichtung (200) hin ausgespart ist.

9. Stapelartige Wäschebehandlungsvorrichtung nach Anspruch 8, wobei der vorstehende Führungsabschnitt aufweist:
ein Paar vorderer Führungsvorsprünge (381), die jeweils auf beiden Seiten eines vorderen Abschnitts einer unteren Fläche der oberen Basis ausgebildet sind; und
ein Paar hinterer Führungsvorsprünge (386), die jeweils auf beiden Seiten eines hinteren Abschnitts der unteren Fläche der oberen Basis (300) ausgebildet sind,
wobei die Führungsnut aufweist:
ein Paar vorderer Führungsnuten (410), die in der unteren Deckplatte (400) an Positionen ausgespart sind, die Positionen des Paars vorderer Führungsvorsprungsabschnitte (381) entsprechen; und
ein Paar hinterer Führungsnuten (420), die in der unteren Deckplatte (400) an Positionen ausgespart sind, die den Positionen des Paars hinterer Führungsvorsprünge (386) entsprechen.

10. Stapelartige Wäschebehandlungsvorrichtung nach Anspruch 9, wobei der vordere Führungsvorsprung (381) aufweist:
eine vordere Führungsfläche (382), die eine untere Fläche davon definiert;
eine vordere geneigte Fläche (384), die von einem vorderen Ende der vorderen Führungsfläche (382) zu einer unteren Fläche der oberen Basis (300) nach oben geneigt ist; und
eine hintere geneigte Fläche (385), die von einem hinteren Ende der vorderen Führungsfläche (382) zu einer unteren Fläche der oberen Basis (300) nach oben geneigt ist,
wobei die vordere Führungsnut (410) aufweist:
eine Führungsfläche (414), die eine untere Fläche davon definiert;
eine vordere geneigte Fläche (412), die von einem vorderen Ende der Führungsfläche (414) zu einer oberen Fläche der unteren Deckplatte (400) nach oben geneigt ist; und
eine hintere geneigte Fläche (416), die von einem hinteren Ende der Führungsfläche (414) zu der oberen Fläche der unteren Deckplatte (400) nach oben geneigt ist.

11. Stapelartige Wäschebehandlungsvorrichtung nach Anspruch 10, wobei die vordere geneigte Fläche (384) eine Hilfsführungsfläche (383) aufweist, die auf einer Ebene höher als eine Ebene der vorderen Führungsfläche (382) positioniert ist.

12. Stapelartige Wäschebehandlungsvorrichtung nach Anspruch 10 oder 11, wobei eine Außenkante der vorderen Führungsfläche (382) oder der hinteren Führungsfläche (387) eine gekrümmte Fläche aufweist.

13. Stapelartige Wäschebehandlungsvorrichtung nach Anspruch 9, wobei sich der Stützvorsprung (380) von einer Außenfläche der oberen Basis (300) nach außen erstreckt, wobei sich der Führungsvorsprung von einem Ende des Stützvorsprungs (380) nach unten erstreckt.

## Revendications

1. Appareil de traitement du linge du type à empilement comprenant :
un appareil de traitement supérieur (100) comportant :
une armoire supérieure (110) définissant une apparence supérieure de l'appareil de traitement du linge, et comportant une base supérieure (300) ;
un tambour de séchage (120) disposé de manière à pouvoir tourner dans l'armoire supérieure (110) ;
un système d'entraînement supérieur (140) disposé sur la base supérieure (300) pour faire tourner le tambour de séchage (120) ; et
un trajet d'écoulement d'air (130) pour fournir de l'air au tambour de séchage (120) et l'évacuer de celui-ci, et
un appareil de traitement inférieur (200) comportant :
une armoire inférieure (210) définissant une apparence inférieure de l'appareil de traitement du linge et comportant un panneau de dessus inférieur (400) sur lequel la base supérieure (300) est montée ;
une cuve (220) disposée dans l'armoire inférieure (210) pour stocker de l'eau de lavage ;
un tambour de lavage (240) disposé à l'intérieur de la cuve (220) ; et
un système d'entraînement inférieur (230) pour faire tourner le tambour de lavage (240),
dans lequel une partie faisant saillie de support (380) est formée sur une partie inférieure de la base supérieure (300) pour supporter l'armoire supérieure (110) par rapport à l'armoire inférieure (210),
dans lequel l'armoire supérieure (110) présente un panneau latéral supérieur (117) définissant une face latérale de l'appareil de traitement supérieur (100), et l'armoire inférieure (210) présente un panneau latéral inférieur (214) définissant une face latérale de l'appareil de traitement inférieur (200),
dans lequel la partie faisant saillie de support (380) est interposée entre le panneau latéral supérieur (17) et le panneau latéral inférieur (214) pour supporter l'appareil de traitement supérieur (100),
**caractérisé en ce que** :
la base supérieure (300) se compose d'un matériau en résine synthétique ;
le panneau latéral supérieur (117) comporte une partie pliée horizontale supérieure (177a) s'étendant horizontalement depuis un fond du panneau latéral supérieur (117) vers un intérieur de l'appareil de traitement supérieur (100) ; et
la partie faisant saillie de support (380) est disposée vers l'intérieur de la partie pliée horizontale supérieure (177a).

2. Appareil de traitement du linge du type à empilement selon la revendication 1, dans lequel le panneau latéral supérieur (117) présente une partie pliée verticale (177b) pliée vers le haut depuis une extrémité de la partie pliée horizontale (177a), et une partie de support de base (177c) pliée depuis l'extrémité de la partie pliée verticale (177b) à une partie supérieure de la partie faisant saillie de support (380),
dans lequel la partie de support de base (177c) est positionnée sur la partie faisant saillie de support (380).

3. Appareil de traitement du linge du type à empilement selon la revendication 2, dans lequel le panneau de dessus inférieur (400) présente une face de support (430) interposée entre le panneau latéral inférieur (214) et la partie faisant saillie de support (380) pour supporter la partie faisant saillie de support (380), et dans lequel une extrémité extérieure de la face de support (430) est espacée d'un espacement prédéterminé de la partie pliée verticale (177b).

4. Appareil de traitement du linge du type à empilement selon la revendication 3, dans lequel le panneau latéral inférieur (214) présente une partie pliée horizontale inférieure (214a) s'étendant horizontalement depuis un dessus du panneau latéral inférieur (214) et vers l'intérieur de l'appareil de traitement inférieur (200),
dans lequel la face de support (430) est disposée sur la partie pliée horizontale inférieure (214a).

5. Appareil de traitement du linge du type à empilement selon la revendication 4, dans lequel la partie pliée horizontale supérieure (177a) et la partie pliée horizontale inférieure (214a) sont espacées l'une de l'autre d'un premier espacement pour l'isolation.

6. Appareil de traitement du linge du type à empilement selon la revendication 5, dans lequel un cadre de renforcement (215) est en outre disposé sur le dessus du panneau latéral inférieur (214),
dans lequel le cadre de renforcement comporte un cadre horizontal (216) reposant sur une face supérieure de la partie pliée horizontale inférieure (214a), et un cadre vertical (217) s'étendant vers le bas depuis une extrémité intérieure du cadre horizontal (216).

7. Appareil de traitement du linge du type à empilement selon la revendication 6, dans lequel le cadre horizontal (216) est situé entre la partie pliée horizontale inférieure (214a) et la face de support (430), dans lequel le cadre horizontal (216) et la partie pliée horizontale supérieure (177a) sont espacés l'un de l'autre d'un deuxième espacement inférieur au premier espacement.

8. Appareil de traitement du linge du type à empilement selon l'une quelconque des revendications 1 à 7, dans lequel
la partie faisant saillie de support (380) comporte une partie faisant saillie de guidage faisant saillie vers le panneau supérieur inférieur (400),
dans lequel le panneau supérieur inférieur (400) présente une rainure de guidage définie dans celui-ci sur une position correspondant à une position de la partie faisant saillie de guidage, dans lequel la partie faisant saillie de guidage est insérée dans la rainure de guidage, et
dans lequel la rainure de guidage est adjacente au panneau latéral inférieur (214) et est évidée vers l'intérieur de l'appareil de traitement inférieur (200).

9. Appareil de traitement du linge du type à empilement selon la revendication 8, dans lequel la partie faisant saillie de guidage comporte :
une paire de parties faisant saillie de guidage avant (381) formées respectivement des deux côtés d'une partie avant d'une face inférieure de la base supérieure ; et
une paire de parties faisant saillie de guidage arrière (386) formées respectivement des deux côtés d'une partie arrière de la face inférieure de la base supérieure (300),
dans lequel la rainure de guidage comporte :
une paire de rainures de guidage avant (410) évidées dans le panneau supérieur inférieur (400) dans des positions correspondant à des positions de la paire de parties faisant saillie de guidage avant (381) ; et
une paire de rainures de guidage arrière (420) évidées dans le panneau supérieur inférieur (400) dans des positions correspondant à des positions de la paire de parties faisant saillie de guidage arrière (386).

10. Appareil de traitement du linge du type à empilement selon la revendication 9, dans lequel la partie faisant saillie de guidage avant (381) présente :
une face de guidage avant (382) définissant une face inférieure de celle-ci ;
une face inclinée avant (384) inclinée vers le haut depuis une extrémité avant de la face de guidage avant (382) à une face inférieure de la base supérieure (300) ; et
une face inclinée arrière (385) inclinée vers le haut depuis une extrémité arrière de la face de guidage avant (382) à la face inférieure de la base supérieure (300),
dans lequel la rainure de guidage avant (410) présente :
une face de guidage (414) définissant une face inférieure de celle-ci ;
une face inclinée avant (412) inclinée vers le haut depuis une extrémité avant de la face de guidage (414) à une face supérieure du panneau supérieur inférieur (400) ; et
une face inclinée arrière (416) inclinée vers le haut depuis une extrémité arrière de la face de guidage (414) à la face supérieure du panneau supérieur inférieur (400).

11. Appareil de traitement du linge du type à empilement selon la revendication 10, dans lequel la face inclinée avant (384) présente une face de guidage auxiliaire (383) positionnée sur un niveau plus haut qu'un niveau de la face de guidage avant (382).

12. Appareil de traitement du linge du type à empilement selon la revendication 10 ou 11, dans lequel un bord extérieur de la face de guidage avant (382) ou de la face de guidage arrière (387) présente une face incurvée.

13. Appareil de traitement du linge du type à empilement selon la revendication 9, dans lequel la partie faisant saillie de support (380) s'étend vers l'extérieur depuis une face extérieure de la base supérieure (300), dans lequel la partie faisant saillie de guidage s'étend vers le bas depuis une extrémité de la partie faisant saillie de support (380).
